# EUROPÄISCHE PATENTSCHRIFT

(11) **EP 2 041 423 B1**
(45) Veröffentlichungstag und Bekanntmachung des Hinweises auf die Patenterteilung: **06.09.2017**
(21) Anmeldenummer: 07787277.8
(22) Anmeldetag: 10.07.2007
(51) Int. Cl.: F02M 37/10

(54) **FÖRDEREINHEIT ZUM FÖRDERN VON KRAFTSTOFF**
DELIVERY UNIT FOR DELIVERING FUEL
UNITÉ D'ALIMENTATION POUR L'ALIMENTATION DE CARBURANT

(30) Priorität: 11.07.2006 DE 102006032101
(43) Veröffentlichungstag der Anmeldung: 01.04.2009
(73) Patentinhaber: Continental Automotive GmbH, 30165 Hannover (DE)
(72) Erfinder: ECK, Karl, 60318 Frankfurt (DE); HAGIST, Dieter, 56112 Lahnstein (DE); KADLER, Matthias, 64521 Gross-Gerau (DE); MAASZ, Martin, 65843 Sulzbach (DE); SCHÖNERT, Oliver, 59757 Arnsberg (DE); TEICHERT, Michael, 65824 Schwalbach (DE)
(86) Internationale Anmeldenummer: PCT/EP2007/057001
(87) Internationale Veröffentlichungsnummer: WO 2008/006813

(56) Entgegenhaltungen:
- EP-A1- 1 045 972
- WO-A-01/57387
- WO-A-2005/085623
- DE-C1- 19 834 653
- JP-A- S63 306 271
- US-A- 4 546 750
- US-A- 4 974 570
- US-A- 5 415 146
- US-A- 5 647 329
- US-A1- 2003 188 786

## Beschreibung

### Fördereinheit zum Fördern von Kraftstoff

Die Erfindung betrifft eine Fördereinheit zum Fördern von Kraftstoff in einem Kraftstoffbehälter eines Kraftfahrzeuges mit einem Schwalltopf zum Sammeln des Kraftstoffs und mit einem Vorfilter zum Filtern von aus dem Schwalltopf abgesaugtem Kraftstoff.

Solche Fördereinheiten werden in heutigen Kraftstoffbehältern häufig eingesetzt und sind aus der Praxis bekannt. Der Vorfilter ist häufig als separates Bauteil ausgebildet und wird an den Schwalltopf oder an eine Kraftstoff aus dem Schwalltopf ansaugende Kraftstoffpumpe montiert. Dies führt zu einer aufwändigen Fertigung und Montage des Vorfilters. Weiterhin kann sich der Vorfilter an Bauteile der Kraftstoffpumpe oder des Schwalltopfes anschmiegen und hierdurch die nutzbare Filterfläche begrenzen. Schlanke Filter erhöhen zudem die Gefahr der Ansaugung von Luft.

Aus WO01/57387A1 ist eine Fördereinheit mit einem Vorfilter bekannt. Der Vorfilter ist als separates Bauteil innerhalb des Schwalltopfes ausgebildet.

Aus WO2005/085623A1 und DE19834653C1 sind zwei Fördereinheiten mit einstückigem Grobfilter bekannt. Die Filter sind als abstehende Formelemente außerhalb des Schwalltopfes gebildet. Der Erfindung liegt das Problem zugrunde, eine Fördereinheit der eingangs genannten Art so weiterzubilden, dass sie besonders kostengünstig zu fertigen ist.

Dieses Problem wird erfindungsgemäß dadurch gelöst, dass der Vorfilter innerhalb des Schwalltopfes angeordnet ist und stoffschlüssig mit dem Schwalltopf verbunden ist, indem der Vorfilter in ein Spritzgusswerkzeug eingelegt wird und bei der Fertigung des Schwalltopfes vom Kunststoff des Schwalltopfes umspritzt wird, oder einstückig mit dem Schwalltopf gefertigt ist.

Durch diese Gestaltung bildet der Vorfilter zusammen mit dem erfindungsgemäßen Schwalltopf eine bauliche Einheit, welche mit weiteren Bauteilen wie der Kraftstoffpumpe montiert werden kann. Eine separate Montage des Vorfilters ist dank der Erfindung nicht erforderlich. Weiterhin wird der Vorfilter durch die Befestigung an dem Mantel des erfindungsgemäßen Schwalltopfes in seiner vorgesehenen Lage gehalten. Daher wird ein Anschmiegen des Vorfilters an angrenzende Bauteile weitgehend vermieden. Die stoffschlüssige Befestigung des Vorfilters an dem Mantel des Schwalltopfes kann beispielsweise dadurch erzeugt werden, dass der Vorfilter als Einlegeteil in ein zur Fertigung des Schwalltopfes vorgesehenes Spritzgusswerkzeug eingelegt wird. Beim anschließenden Spritzgussvorgang wird der Vorfilter mit dem Kunststoff des Schwalltopfes umspritzt. Die einstückige Fertigung des Schwalltopfes mit dem Vorfilter wird beispielsweise durch eine entsprechende Formgebung des Spritzgusswerkzeuges erreicht.

Ein Biegen oder Anschmiegen des Vorfilters an angrenzende Bauteile der erfindungsgemäßen Fördereinheit lässt sich einfach vermeiden, wenn der Vorfilter als verformungssteifes Element ausgebildet ist. Die verformungssteife Einheit des Vorfilters lässt sich durch eine entsprechende Stabilität oder durch eine Spannung in dem Schwalltopf erreichen.

Zur Vereinfachung der Fertigung der erfindungsgemäßen Fördereinheit trägt es bei, wenn ein Mantel des Schwalltopfes bis zu einer Bodenplatte geführt ist und wenn der Vorfilter die Bodenplatte zumindest teilweise überdeckt. Durch diese Gestaltung wird vorzugsweise eine zwischen dem Vorfilter und der Bodenplatte angeordnete Sammelkammer erzeugt, aus der Kraftstoff abgesaugt wird.

Zur weiteren Vereinfachung der Fertigung der erfindungsgemäßen Fördereinheit trägt es bei, wenn die Bodenplatte dichtend an dem Mantel befestigt ist. Durch diese Gestaltung lässt sich die Bodenplatte als separates Bauteil fertigen. Der Mantel des Schwalltopfes lässt sich daher zusammen mit dem Vorfilter als axial entformbares Bauteil fertigen und in einem folgenden Fertigungsschritt mit der Bodenplatte verbinden.

Zur weiteren Vereinfachung der Fertigung der erfindungsgemäßen Fördereinheit trägt es bei, wenn der Vorfilter quer in dem Mantel angeordnet ist. Dies trägt zur einfachen axialen Entformbarkeit des Mantels mit dem Vorfilters bei. Weiterhin hat die erfindungsgemäße Fördereinheit hierdurch einen besonders geringen Bauraum.

Die einstückige Fertigung des Vorfilters mit dem Schwalltopf gestaltet sich gemäß einer anderen vorteilhaften Weiterbildung der Erfindung besonders kostengünstig, wenn der Vorfilter auf beiden Seiten geneigt zueinander angeordnete Stege aufweist und wenn die Stege der gegenüberliegenden Seiten zur Bildung von Maschen des Vorfilters ineinander übergehen. Diese Stege können von Rillen einander gegenüberstehender Formteile des Spritzgusswerkzeuges erzeugt werden. Die Rillen der Formteile werden gegeneinander gedrückt. Dadurch entstehen an den Berührungspunkten der Formteile die Maschen des Vorfilters.

Zur weiteren Verringerung der Fertigungskosten der erfindungsgemäßen Fördereinheit trägt es bei, wenn ein Gehäuse eines Feinfilters einstückig mit dem Mantel gefertigt und von der Bodenplatte verschlossen ist.

Zur Verringerung der Abmessungen der erfindungsgemäßen Fördereinheit bei einer großen Filterfläche des Vorfilters trägt es bei, wenn der Vorfilter das Gehäuse des Feinfilters umschließt.

Die erfindungsgemäße Fördereinheit weist eine besonders hohe Stabilität auf und lässt sich kostengünstig fertigen, wenn an dem Gehäuse des Feinfilters angeordnete und einstückig mit dem Gehäuse gefertigte Versteifungsrippen parallel zu dem Mantel angeordnet sind. Hierdurch lässt sich die bauliche Einheit aus Mantel, Vorfilter und Feinfilter einfach in einem axial entformbaren Spritzgusswerkzeug fertigen.

Zur weiteren Verringerung der Fertigungskosten der erfindungsgemäßen Fördereinheit trägt es bei, wenn der Vorfilter Stutzen und Stützelemente zur Halterung von innerhalb des Schwalltopfes angeordneten Bauteilen umschließt. Weiterhin hat der Vorfilter hierdurch eine besonders große Oberfläche.

Die Erfindung lässt zahlreiche Ausführungsformen zu. Zur weiteren Verdeutlichung ihres Grundprinzips ist eine davon in der Zeichnung dargestellt und wird nachfolgend beschrieben. Diese zeigt in
- Fig. 1: einen Teilschnitt durch eine erfindungsgemäße Fördereinheit,
- Fig. 2: einen zweiten, zum Teilschnitt aus Figur 1 versetzten Teilschnitt der erfindungsgemäßen Fördereinheit,
- Fig. 3: eine perspektivische Darstellung eines Schwalltopfes der erfindungsgemäßen Einrichtung mit einem Vorfilter im Teilschnitt,
- Fig. 4: stark vergrößert einen Teilbereich des Schwalltopfes aus Figur 1 mit zwei Formteilen eines Spritzgusswerkzeuges.

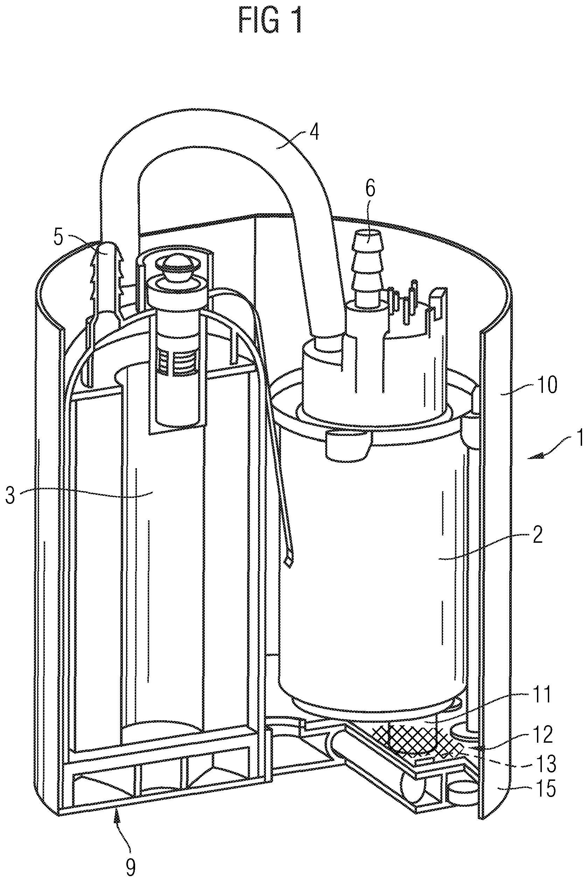

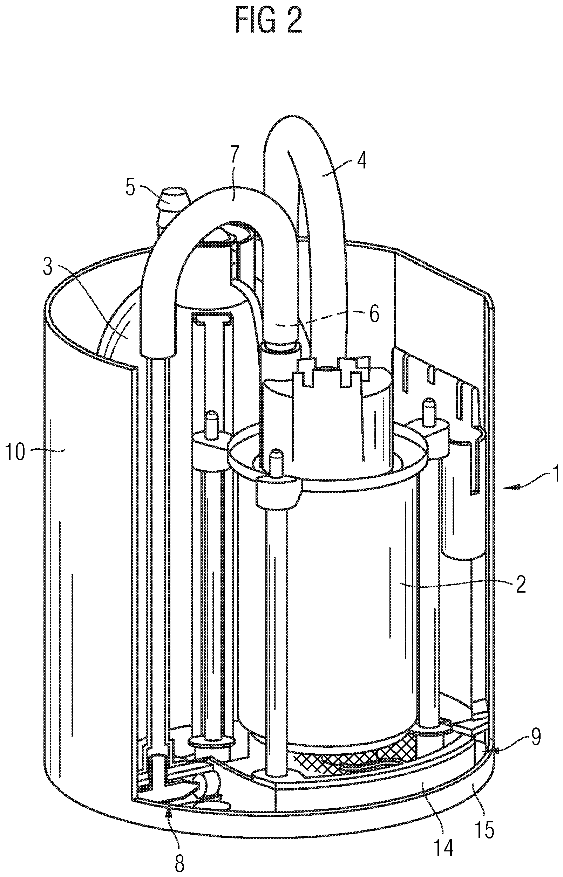

Figur 1 zeigt eine Fördereinheit zum Fördern Kraftstoff in einem Kraftstoffbehälter eines Kraftfahrzeuges zu einer nicht dargestellten Brennkraftmaschine des Kraftfahrzeuges. Die Einrichtung hat eine in einem Schwalltopf 1 angeordnete, elektromotorisch angetriebene Kraftstoffpumpe 2 und einen Feinfilter 3. Der Feinfilter 3 ist ebenfalls in dem Schwalltopf 1 angeordnet und über eine Kraftstoffleitung 4 mit der Kraftstoffpumpe 2 verbunden. Weiterhin hat der Feinfilter 3 einen Anschlussstutzen 5 für eine nicht dargestellte, zu der Brennkraftmaschine des Kraftstoffbehälters führende Vorlaufleitung. An einem Anschluss 6 der Kraftstoffpumpe 2 ist eine in Figur 2 dargestellte Leitung 7 für eine Saugstrahlpumpe 8 angeschlossen. Die Saugstrahlpumpe 8 saugt Kraftstoff aus der Umgebung des Schwalltopfes 1 an und fördert diesen in den Schwalltopf 1. Der Schwalltopf 1 dient zum Sammeln des Kraftstoffs und hat eine Bodenplatte 9 und einen mit der Bodenplatte 9 dichtend verbundenen Mantel 10. Ein Ansaugstutzen 11 der Kraftstoffpumpe 2 ragt durch einen Vorfilter 12 in eine Sammelkammer 13 der Bodenplatte 9 hinein. In den Schwalltopf 1 einströmender Kraftstoff gelangt über den Vorfilter 12 in die Sammelkammer 13 und damit zu dem Ansaugstutzen 11 der Kraftstoffpumpe 2. Damit vermag die Kraftstoffpumpe 2 Kraftstoff aus dem Schwalltopf 1 anzusaugen und über den Feinfilter 3 zu dem Anschlussstutzen 5 für die Vorlaufleitung zu fördern. Der Mantel 10 des Schwalltopfes 1 hat einen über einen Stützrand 14 der Bodenplatte 9 greifenden Rand 15. Der Rand 15 und der Stützrand 14 sind dichtend miteinander verbunden.

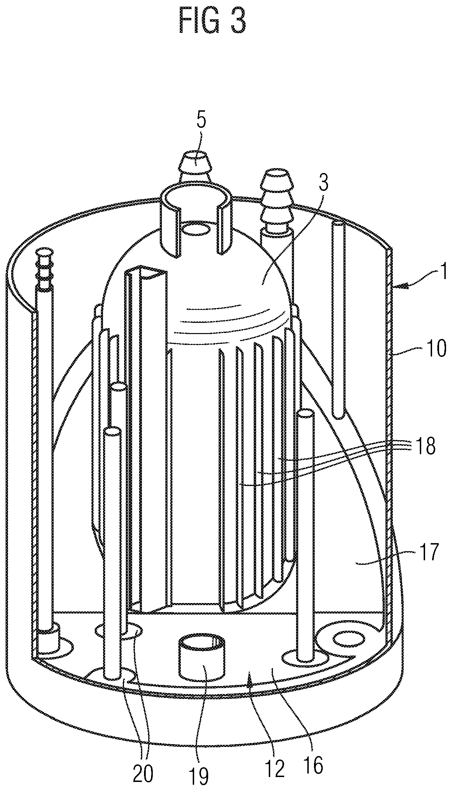

Figur 3 zeigt den Schwalltopf 1 aus Figur 1 in einem Teilschnitt. Hierbei ist zu erkennen, dass der Vorfilter 12 einen horizontalen Abschnitt 16 und einen von der horizontalen Ebene abstehenden Abschnitt 17 hat und mit dem Mantel 10 des Schwalltopfes 1 stoffschlüssig verbunden oder einstückig mit dem Mantel 10 des Schwalltopfes gefertigt ist. Der Vorfilter 12 ist einstückig gefertigt und mit Kunststoff des Schwalltopfes 1 umspritzt. Der von der horizontalen Ebene abstehende Abschnitt 17 des Vorfilters 12 ist zur Senkrechten geneigt. An dem Feinfilter 3 angeordnete Versteifungsrippen 18 sind parallel zu dem Mantel 10 des Schwalltopfes 1 angeordnet und einstückig mit dem Feinfilter 3 gefertigt. Der Feinfilter 3 wird teilweise von dem Vorfilter 12 umschlossen. Weiterhin sind Stutzen 19 und Stützelemente 20 zur Halterung und zum Anschluss von innerhalb des Schwalltopfes 1 angeordneten und in den Figuren 1 und 2 beschriebenen Bauteilen von dem Vorfilter 12 umschlossen.

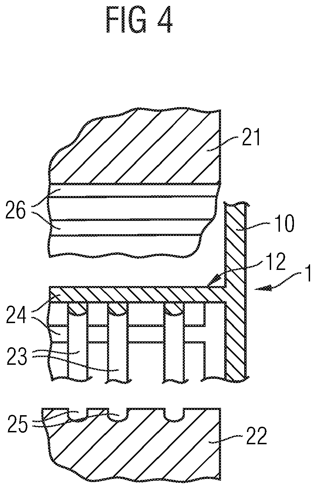

Figur 4 zeigt eine Schnittdarstellung durch einen Teilbereich des Schwalltopfes 1 mit dem Vorfilter 12 und mit zwei Formteilen 21, 22 eines Spritzgusswerkzeuges zur einstückigen Fertigung des Schwalltopfes 1 mit dem Vorfilter 12. Der Vorfilter 12 weist auf beiden Seiten zueinander versetzt angeordnete Stege 23, 24 auf, welche an den Schnittpunkten miteinander verbunden sind. Die Stege 23, 24 werden von in den Formteilen 21, 22 angeordneten Rillen 25, 26 erzeugt. Damit weist der Vorfilter 12 eine gitterartige Struktur auf und ist damit als verformungssteifes Element ausgebildet. Gemäß der Erfindung ist der Vorfilter 12 in ein Spritzgusswerkzeug eingelegt und bei der Fertigung des Schwalltopfes 1 von dem Kunststoff umspritzt werden. Damit ist der Vorfilter 12 stoffschlüssig mit dem Schwalltopf 1 verbunden.

## Patentansprüche

1. Fördereinheit zum Fördern von Kraftstoff in einem Kraftstoffbehälter eines Kraftfahrzeuges, mit einem Schwalltopf (1) zum Sammeln des Kraftstoffs und mit einem Vorfilter (12) zum Filtern von aus dem Schwalltopf (1) abgesaugtem Kraftstoff, wobei der Vorfilter (12) innerhalb des Schwalltopfes (1) angeordnet ist, **dadurch gekennzeichnet, dass** der Vorfilter (12) stoffschlüssig mit dem Schwalltopf (1) verbunden ist, indem der Vorfilter (12) in ein Spritzgusswerkzeug eingelegt wird und bei der Fertigung des Schwalltopfes (1) vom Kunststoff des Schwalltopfes (1) umspritzt wird, oder einstückig mit dem Schwalltopf (1) gefertigt ist.

2. Fördereinheit nach Anspruch 1, **dadurch gekennzeichnet, dass** der Vorfilter (12) als verformungssteifes Element ausgebildet ist.

3. Fördereinheit nach Anspruch 1 oder 2, **dadurch gekennzeichnet, dass** ein Mantel (10) des Schwalltopfes (1) bis zu einer Bodenplatte (9) geführt ist und dass der Vorfilter (12) die Bodenplatte (9) zumindest teilweise überdeckt.

4. Fördereinheit nach zumindest einem der vorhergehenden Ansprüche, **dadurch gekennzeichnet, dass** die Bodenplatte (9) dichtend an dem Mantel (10) befestigt ist.

5. Fördereinheit nach zumindest einem der vorhergehenden Ansprüche, **dadurch gekennzeichnet, dass** der Vorfilter (12) quer in dem Mantel (10) angeordnet ist.

6. Fördereinheit nach zumindest einem der vorhergehenden Ansprüche, **dadurch gekennzeichnet, dass** der Vorfilter (12) auf beiden Seiten geneigt zueinander angeordnete Stege (23, 24) aufweist und dass die Stege (23, 24) der gegenüberliegenden Seiten zur Bildung von Maschen des Vorfilters (12) ineinander übergehen.

7. Fördereinheit nach zumindest einem der vorhergehenden Ansprüche, **dadurch gekennzeichnet, dass** ein Gehäuse eines Feinfilters (3) einstückig mit dem Mantel (10) gefertigt und von der Bodenplatte (9) verschlossen ist.

8. Fördereinheit nach zumindest einem der vorhergehenden Ansprüche, **dadurch gekennzeichnet, dass** der Vorfilter (12) das Gehäuse des Feinfilters (3) umschließt.

9. Fördereinheit nach zumindest einem der vorhergehenden Ansprüche, **dadurch gekennzeichnet, dass** an dem Gehäuse des Feinfilters (3) angeordnete und einstückig mit dem Gehäuse gefertigte Versteifungsrippen (18) parallel zu dem Mantel (10) angeordnet sind.

10. Fördereinheit nach zumindest einem der vorhergehenden Ansprüche, **dadurch gekennzeichnet, dass** der Vorfilter (12) Stutzen (19) und Stützelemente (20) zur Halterung von innerhalb des Schwalltopfes (1) angeordneten Bauteilen umschließt.

## Claims

1. Delivery unit for delivering fuel in a fuel tank of a motor vehicle, with a swirl pot (1) for collecting the fuel and with a prefilter (12) for filtering fuel sucked up from the swirl pot (1), wherein the prefilter (12) is arranged within the swirl pot (1), **characterized in that** the prefilter (12) is connected to the swirl pot (1) with a cohesive material joint by the prefilter (12) being inserted into an injection mould and being encapsulated by the plastic of the swirl pot (1) during the manufacturing of the swirl pot (1), or is manufactured as one piece with the swirl pot (1).

2. Delivery unit according to Claim 1, **characterized in that** the prefilter (12) is designed as a dimensionally stiff element.

3. Delivery unit according to Claim 1 or 2, **characterized in that** a casing (10) of the swirl pot (1) is taken as far as a base plate (9), and **in that** the prefilter (12) at least partially covers the base plate (9).

4. Delivery unit according to at least one of the preceding claims, **characterized in that** the base plate (9) is fastened to the casing (10) in a sealing manner.

5. Delivery unit according to at least one of the preceding claims, **characterized in that** the prefilter (12) is arranged transversely in the casing (10).

6. Delivery unit according to at least one of the preceding claims, **characterized in that** the prefilter (12) has webs (23, 24) arranged inclined with respect to each other on both sides, and **in that** the webs (23, 24) of the opposite sides merge into each other in order to form meshes of the prefilter (12).

7. Delivery unit according to at least one of the preceding claims, **characterized in that** a housing of a fine filter (3) is manufactured as one piece with the casing (10) and is closed by the base plate (9).

8. Delivery unit according to at least one of the preceding claims, **characterized in that** the prefilter (12) surrounds the housing of the fine filter (3).

9. Delivery unit according to at least one of the preceding claims, **characterized in that** stiffening ribs (18) which are arranged on the housing of the fine filter (3) and are manufactured as one piece with the housing are arranged parallel to the casing (10).

10. Delivery unit according to at least one of the preceding claims, **characterized in that** the prefilter (12) surrounds connectors (19) and supporting elements (20) for holding components arranged within the swirl pot (1).

## Revendications

1. Unité d'alimentation pour alimenter du carburant dans un réservoir de carburant d'un véhicule automobile, comprenant un pot de brise-jet (1) pour collecter le carburant et comprenant un pré-filtre (12) pour filtrer le carburant aspiré hors du pot de brise-jet (1), le pré-filtre (12) étant disposé à l'intérieur du pot de brise-jet (1), **caractérisée en ce que** le pré-filtre (12) est raccordé par liaison de matière au pot de brise-jet (1), par insertion du pré-filtre (12) dans un outil de moulage par injection et par surmoulage avec le plastique du pot de brise-jet (1) lors de la fabrication du pot de brise-jet (1), ou est fabriqué d'une seule pièce avec le pot de brise-jet (1).

2. Unité d'alimentation selon la revendication 1, **caractérisée en ce que** le pré-filtre (12) est réalisé sous forme d'élément résistant à la déformation.

3. Unité d'alimentation selon la revendication 1 ou 2, **caractérisée en ce qu'**une enveloppe (10) du pot de brise-jet (1) est guidée jusqu'à une plaque de fond (9) et **en ce que** le pré-filtre (12) recouvre au moins en partie la plaque de fond (9).

4. Unité d'alimentation selon au moins l'une quelconque des revendications précédentes, **caractérisée en ce que** la plaque de fond (9) est fixée de manière hermétique à l'enveloppe (10).

5. Unité d'alimentation selon au moins l'une quelconque des revendications précédentes, **caractérisée en ce que** le pré-filtre (12) est disposé transversalement dans l'enveloppe (10).

6. Unité d'alimentation selon au moins l'une quelconque des revendications précédentes, **caractérisée en ce que** le pré-filtre (12) présente des nervures (23, 24) disposées des deux côtés de manière inclinée l'une par rapport à l'autre et **en ce que** les nervures (23, 24) des côtés opposés se prolongent l'une dans l'autre pour former des mailles du pré-filtre (12).

7. Unité d'alimentation selon au moins l'une quelconque des revendications précédentes, **caractérisée en ce qu'**un boîtier d'un filtre fin (3) est fabriqué d'une seule pièce avec l'enveloppe (10) et est fermé par la plaque de fond (9).

8. Unité d'alimentation selon au moins l'une quelconque des revendications précédentes, **caractérisée en ce que** le pré-filtre (12) entoure le boîtier du filtre fin (3).

9. Unité d'alimentation selon au moins l'une quelconque des revendications précédentes, **caractérisée en ce que** des nervures de rigidification (18) disposées sur le boîtier du filtre fin (3) et réalisées d'une seule pièce avec le boîtier sont disposées parallèlement à l'enveloppe (10).

10. Unité d'alimentation selon au moins l'une quelconque des revendications précédentes, **caractérisée en ce que** le pré-filtre (12) entoure des embouts (19) et des éléments de support (20) pour supporter des composants disposés à l'intérieur du pot de brise-jet (1).
